# EUROPÄISCHE PATENTSCHRIFT

(11) **EP 2 884 083 B1**
(45) Veröffentlichungstag und Bekanntmachung des Hinweises auf die Patenterteilung: **08.04.2020**
(21) Anmeldenummer: 14191721.1
(22) Anmeldetag: 04.11.2014
(51) Int. Cl.: F02D 41/12, F02N 11/08, B60W 30/18

(54) **Verfahren zum Start eines Verbrennungsmotors eines Kraftfahrzeugs und Kraftfahrzeug**
Methods for starting a combustion engine of a motor vehicle and motor vehicle
Procédé destiné au démarrage d'un moteur à combustion interne d'un véhicule automobile et véhicule automobile

(30) Priorität: 06.12.2013 DE 102013225150
(43) Veröffentlichungstag der Anmeldung: 17.06.2015
(73) Patentinhaber: Volkswagen Aktiengesellschaft, 38440 Wolfsburg (DE)
(72) Erfinder: Schäfer, Michael, 38518 Gifhorn (DE); Fröhlich, Björn, 38518 Gifhorn (DE); Kalms, Rene, 38110 Braunschweig (DE)

(56) Entgegenhaltungen:
- EP-A1- 1 762 417
- DE-A1- 19 945 473
- DE-A1-102006 008 640
- DE-A1-102011 056 017
- DE-A1-102011 085 151
- DE-T2- 60 004 417

## Beschreibung

Die Erfindung betrifft ein Verfahren zum Start eines Verbrennungsmotors eines Kraftfahrzeugs, mit wenigstens einem Anlasser zum Starten des Verbrennungsmotors, wenigstens einer eingangsseitig mit einer Ausgangswelle des Verbrennungsmotors und ausgangsseitig mit den Antriebsrädern des Kraftfahrzeugs gekoppelten Kupplung, wobei während Segeln des Kraftfahrzeugs, in dem das Kraftfahrzeug mit ausgeschaltetem Verbrennungsmotor und geöffneter Kupplung antriebsfrei rollt, der Verbrennungsmotor durch Schließen der Kupplung anschleppbar ist.

Um den Kraftstoffverbrauch bei einem Kraftfahrzeug mit einem Verbrennungsmotor zu sparen, kann der Verbrennungsmotor auch während der Fahrt abgeschaltet werden, insbesondere in den Betriebsphasen in denen keine Antriebskraft von dem Verbrennungsmotor verlangt wird - z. B. wenn der Fahrer den Fuß vom Fahrpedal nimmt. In solchem Fall wird der Antriebsstrang zwischen dem Verbrennungsmotor und Antriebsrädern getrennt und der Verbrennungsmotor wird abgestellt. Die Trennung des Antriebsstrangs erfolgt üblicherweise mittels Öffnen einer Anfahrkupplung. Die Betriebsphasen in denen das Kraftfahrzeug mit getrenntem Antriebsstrang und abgeschaltetem Verbrennungsmotor antriebsfrei rollt, werden auch Segeln genannt.
Nachdem der Verbrennungsmotor abgeschaltet wurde, muss er am Ende der Segelphase wieder gestartet werden. Üblicherweise wird der Verbrennungsmotor auch im Segelbetrieb mittels des elektrischen Anlassers gestartet. Die DE 10 2007 047 091 A1 sowie die DE 103 17 090 A1 offenbaren jeweils spezielle Steuerungsverfahren des elektrischen Anlassers. Nachteilig hierbei sind jedoch die hohen Zykluszahlen, denen der elektrische Anlasser bei intensiver Nutzung des Segelns, bzw. beispielsweise noch bei zusätzlicher Verwendung einer Start-Stopp-Automatik, ausgesetzt ist. Zur Bewältigung dieser Belastung muss der Anlasser entsprechend groß und robust ausgestaltet werden, was mit Platz-, Gewichts- und Kostennachteilen verbunden ist. Außerdem ist das Anlassergeräusch insbesondere bei niedrigen Geschwindigkeiten deutlich zu vernehmen.

Aus der DE 10 2010 052 385 A1 ist ein Verfahren zur Steuerung eines Schwungnutzungsbetriebes eines Kraftfahrzeugs mit einem Verbrennungsmotor, einem Getriebe und einer Kupplung bekannt, wo bei Deaktivierung des Schwungnutzungsbetriebes der Verbrennungsmotor in Abhängigkeit von einer Fahrzeuggeschwindigkeit entweder durch kontrolliertes Schließen der Kupplung angeschleppt oder mittels eines Anlassers gestartet wird. Beim Schleppstart wird zum Motorstart die kinetische Energie des Fahrzeuges genutzt. Dabei werden aber insbesondere bei niedrigen Geschwindigkeiten die Radmomente aufgrund der niedrigen notwendigen Gänge beim Anschleppen größer und damit die Verzögerung deutlicher spürbar. Deswegen ist der Schleppstart nur bei größeren Geschwindigkeiten durchführbar. Überdies muss bei Schleppstart die Kupplung sehr langsam geschlossen werden um die Entnahme der kinetischen Energie für den Fahrer möglichst unspürbar durchführen, was den Motorstart deutlich verlängert und in manchen Situationen ungünstig sein kann.

Weiterhin sind aus der EP 1 762 417 A1 und DE 10 2006 008 640 A1 Hybridantriebsstränge bekannt, bei denen das Fahrzeug durch eine E-Maschine angetrieben werden kann und der Verbrennungsmotor mittels einer zwischen ihm und der E-Maschine angeordneten Kupplung von dem Antriebsstrang getrennt und abgestellt werden kann. Zum Wiederstart kann der Verbrennungsmotor dann während der Fahrt durch Schließen der Kupplung angeschleppt werden, wobei die E-Maschine dabei auch entsprechend angesteuert werden kann.

Aufgabe der vorliegenden Erfindung ist es, einen verbesserten Start eines Verbrennungsmotors eines Kraftfahrzeugs und ein Kraftfahrzeug bereitzustellen, die die oben genannten Nachteile bei Start des Verbrennungsmotors wenigstens teilweise überwinden.

Diese Aufgabe wird durch das erfindungsgemäßen Verfahren nach Anspruch 1 und das Kraftfahrzeug nach Anspruch 9 gelöst.

Diese Aufgabe wird in Verbindung mit den Merkmalen des Oberbegriffs von Anspruch 1 dadurch gelöst, dass während des Segelns ein kombinierter Motorstart des Verbrennungsmotors durch eine Kombination aus dem Schließen der Kupplung und der Verwendung des Anlassers durchgeführt werden kann.

Weiterhin wird die Aufgabe durch ein Kraftfahrzeug gelöst, mit wenigstens einem Anlasser zum Starten des Verbrennungsmotors, wenigstens einer eingangsseitig mit einer Ausgangswelle des Verbrennungsmotors und ausgangsseitig mit den Antriebsrädern des Kraftfahrzeugs gekoppelten Kupplung und einer Steuerung, wobei die Steuerung dazu eingerichtet ist, das Verfahren nach dem Anspruch 1 oder einem der abhängigen Ansprüche auszuführen.

Durch den kombinierten Schlepp- und Anlasserstart kann der Anlasser entlastet werden, der Startvorgang gegenüber den beiden vorgenannten Verfahren signifikant verkürzt werden und auch ein deutlich geringeres Radmoment während des Schleppstarts an den Rädern aufgebaut werden. Somit kann der Motorstart für den Fahrer möglichst komfortabel erfolgen und gleichzeitig die Laufzeit und Belastung des Anlassers gekürzt werden. Der kombinierte Motorstart ist überdies in Situationen sinnvoll, in denen es darauf ankommt, einen möglichst schnellen Motorstart durchzuführen, da sich durch die Kombination beider Startverfahren die Startzeit signifikant verkürzt.

Vorteilhafte Ausgestaltungen der Erfindung sind Gegenstand der abhängigen Patentansprüche.

Es wird ein Ausführungsbeispiel des Verfahrens näher beschrieben. Ein Kraftfahrzeugs ist mit einem Verbrennungsmotor und mit einem Anlasser zum Starten des Verbrennungsmotors ausgestattet. Der Anlasser kann als ein Ritzelstarter ausgeführt sein. Weiterhin verfügt das Kraftfahrzeug über eine Kupplung, die eingangsseitig mit einer Ausgangswelle des Verbrennungsmotors und ausgangsseitig mit den Antriebsrädern des Kraftfahrzeugs gekoppelt ist. Der Begriff "gekoppelt" umfasst im Rahmen der vorliegenden Beschreibung sowohl feste als auch schalt- oder variierbare Verbindungen, typischerweise über wenigstens ein vorzugsweise schaltbares Getriebe und Antriebwellen. Kupplung ist insbesondere eine Reibkupplung und kann auch als eine Doppelkupplung ausgeführt sein. Die Kupplung wird automatisch gesteuert. Während des Segelns des Kraftfahrzeugs, in dem das Kraftfahrzeug mit ausgeschaltetem Verbrennungsmotor und geöffneter Kupplung antriebsfrei rollt, kann der Verbrennungsmotor durch Schließen der Kupplung angeschleppt werden. Weiterhin verfügt das Kraftfahrzeug über eine Steuerung, über die mindestens die Kupplung und der Anlasser gesteuert bzw. geregelt werden.

Wenn das Kraftfahrzeug segelt, und der Verbrennungsmotor gestartet werden soll, kann ein kombinierter Motorstart des Verbrennungsmotors durchgeführt werden kann, indem er durch eine Kombination aus dem Schließen der Kupplung und der Verwendung des Anlassers gestartet wird.

Vorteilhaft sind während des Segelns Fahrparameter und/oder Lastanforderungen ermittelt und ausgewertet worden, und es wird ausgewählt, ob ein kombinierter Motorstart, ein Schleppstart oder ein Motorstart mittels des Anlassers durchgeführt wird. Somit kann für jede Fahr- bzw. Betriebssituation ein am bestens passendes Motorstartverfahren ausgewählt werden. Die Fahrparameter können z. B. Fahrzeuggeschwindigkeit, Fahrzeugverzögerung, Fahrpedalwinkel, Fahrpedalwinkeländerungsgradient, Motortemperatur, State of Charge des Energiespeichers für den Anlasser bzw. das Kraftfahrzeug sein. Es müssen natürlich nicht alle hier genannte Parameter ermittelt und ausgewertet werden und es können noch weitere hier nicht genannte dazu kommen. Der kombinierte Motorstart kann dann z. B. ausgewählt werden wenn die Fahrzeuggeschwindigkeit unter einer bestimmten ersten Schwelle liegt. Oberhalb dieser ersten Schwelle kann ein üblicher Schleppstart durchgeführt werden. Es ist auch möglich, den kombinierten Motorstart oberhalb einer zweiten Fahrzeuggeschwindigkeitsschwelle durchzuführen, die niedriger als die erste ist. Unterhalb dieser zweiten Schwelle kann der Verbrennungsmotor dann durch den Anlasser gestartet werden.

Zum Beispiel kann der kombinierte Motorstart in dem Fall durchgeführt werden, wenn eine Lastanforderung oder Lastanforderungsänderung eine bestimmte Schaltschwelle erreicht. Typischerweise ist es der Fall, wenn der Fahrer das Fahrpedal stark oder schnell betätigt. Es signalisiert der Steuerung, dass es eine kritische Situation vorliegen kann und dass ein möglichst schneller Motorstart notwendig ist. Mit dem kombinierten Motorstart wird der Verbrennungsmotor am schnellsten gestartet und dem Fahrer zur Verfügung gestellt.

Weiterhin kann der kombinierter Motorstart durchgeführt wird, wenn ein niedriger Reibkoeffizient zwischen den Antriebsrädern und der Straße ermittelt wird. Somit ist ein komfortabler und energieeffizienter Motorstart auch bei glatter Straße sichergestellt, an der normalerweise der reine Schleppstart nicht durchführbar ist, weil es die Stabilität des Kraftfahrzeugs negativ beeinflussen würde. Die Information über dem Reibkoeffizient kann z. B. von dem ABS oder ESP ermittelt werden. Der kombinierte Motorstart kann vorteilhaft dann ausgelöst werden, wenn zuvor ein reiner Schleppstartvorgang ohne Anspringen des Verbrennungsmotors abgebrochen worden ist. Der Schleppstartversuch konnte beispielhaft wegen eines niedrigen Reibkoeffizienten zwischen den Antriebsräder und der Straße unterbrochen worden sein. Da das Widerstandsmoment des stehenden Verbrennungsmotors viel größer als eines sich schon drehenden ist, kann der Reibkoeffizient aber für die Beschleunigung des sich schon drehenden Verbrennungsmotors ausreichend sein.

Der kombinierte Motorstart umfasst vorteilhaft folgende Schritte:
- Anlegen der Kupplung,
- Aktivieren des Anlassers,
- gesteuerte Erhöhung des Kupplungsmoments, wenn der Anlasser beginnt mit dem Verbrennungsmotor zu drehen,
- Deaktivieren des Anlassers beim Erreichen einer ersten Motordrehzahlschwelle,
- Regelung des Kupplungsmoments ab Erreichen einer zweiten Motordrehzahlschwelle.

In dem hier ausgeführten Beispiel, wo als Anlasser ein Ritzelstarter benutzt ist, wird der Ritzel im Wesentlichen gleichzeitig mit dem Anlegen der Kupplung in den Zahnkranz eingespurt, weil es ein kurze Zeitspanne dauert, bis er ein Drehmoment an die Motorwelle des Verbrennungsmotors ausübt. Unter dem Ausdruck "Aktivieren" ist der Anfang der Drehmomentausübung des Anlassers an die Motorwelle gemeint, was hier üblicherweise automatisch nach dem Einspuren des Ritzels erfolgt. Im Fall eines ständig mit der Motorwelle verbundenen Anlasser z. b. eines Riemenstartgenerators erfolgt das Aktivieren des Anlassers im Wesentlichen gleichzeitig mit der Erhöhung des Kupplungsmoments.
Das größte Widerstandsdrehmoment des Verbrennungsmotors wird im Wesentlichen zusammen von dem Anlasserdrehmoment und dem Schleppdrehmoment überwunden. Sobald die Drehzahl des Verbrennungsmotors eine erste Drehzahlschwelle erreicht, kann der Anlasser deaktiviert werden und die Motorwelle weiter nur mit Hilfe der kinetischen Energie des Fahrzeuges beschleunigt werden. Ab einer bestimmter Drehzahl des Verbrennungsmotors geht die Steuerung der Kupplung in eine Regelung des Kupplungsmomentes auf die Motordrehzahl über.

Der Motorstart kann beendet werden, wenn die Motordrehzahl die Leerlaufdrehzahl oder die ausgangsseitige Drehzahl der Kupplung erreicht oder wenn die Kupplung vollständig geschlossen ist. Ab diesen Moment übernimmt der Verbrennungsmotor wieder die Antriebsfunktion des Kraftfahrzeuges.

Das Kraftfahrzeug kann in einer anderen vorteilhaften Variante zwei Anlasser zum Starten des Verbrennungsmotors aufweisen, nämlich einen Ritzelstarter und einen Riemenstartergenerator. In solchem Fall kann der kombinierte Motorstart unter Verwendung des Ritzelstarters und des Riemenstartergenerator, oder nur einen von beiden durchgeführt werden. Die Drehzahlschwellen für das Deaktivieren des Anlassers können bei dem Ritzelstarter und dem Riemenstartergenerator unterschiedlich sein, wobei durch den Riemenstartergenerator dank seiner guten Regulierbarkeit der Verbrennungsmotor auch während der Regelungsphase des Kupplungsmoments getrieben werden kann. Gegebenenfalls kann das Kupplungsmoment auch nur gesteuert werden und die Motordrehzahl durch den Riemenstartergenerator geregelt werden.

Es sind viele weitere Varianten des Verfahrens vorstellbar. Es kann anhand der ermittelten Fahrparameter und/oder Lastanforderung auch entschieden werden, ob ein kombinierter Motorstart unter Verwendung des Riemenstartergenerators oder des Ritzelstartes oder eine Kombination von beiden durchgeführt wird.

## Patentansprüche

1. Verfahren zum Start eines Verbrennungsmotors eines Kraftfahrzeugs, mit wenigstens einem Anlasser zum Starten des Verbrennungsmotors, wenigstens einer eingangsseitig mit einer Ausgangswelle des Verbrennungsmotors und ausgangsseitig mit den Antriebsrädern des Kraftfahrzeugs gekoppelten automatisch gesteuerten Kupplung, wobei während Segelns des Kraftfahrzeugs, in dem das Kraftfahrzeug mit ausgeschaltetem Verbrennungsmotor und geöffneter Kupplung antriebsfrei rollt, der Verbrennungsmotor durch Schließen der Kupplung anschleppbar ist, wobei der Anlasser ein Ritzelstarter und/oder ein ständig mit der Motorwelle verbundener Riemenstartergenerator ist, **dadurch gekennzeichnet, dass** während des Segelns ein kombinierter Motorstart des Verbrennungsmotors durch eine Kombination aus dem Schließen der Kupplung und der Verwendung des Anlassers durchgeführt werden kann.

2. Verfahren nach Anspruch 1, **dadurch gekennzeichnet, dass** während des Segelns Fahrparameter und/oder Lastanforderungen ermittelt und ausgewertet werden, und dass es ausgewählt wird, ob ein kombinierter Motorstart, ein Schleppstart oder ein Motorstart mittels des Anlassers durchgeführt wird.

3. Verfahren nach Anspruch 1 oder 2, **dadurch gekennzeichnet, dass** der kombinierte Motorstart durchgeführt wird, wenn eine Lastanforderung oder Lastanforderungsänderung eine bestimmte Schaltschwelle erreicht.

4. Verfahren nach einem der vorhergehenden Ansprüche, **dadurch gekennzeichnet, dass** der kombinierte Motorstart durchgeführt wird, wenn ein niedriger Reibkoeffizient zwischen den Antriebsrädern und der Straße ermittelt wird.

5. Verfahren nach einem der vorhergehenden Ansprüche, **dadurch gekennzeichnet, dass** der kombinierte Motorstart ausgelöst wird, wenn zuvor ein Schleppstartvorgang ohne Anspringen des Verbrennungsmotors abgebrochen worden ist.

6. Verfahren nach einem der vorhergehenden Ansprüche, **dadurch gekennzeichnet, dass** der kombinierte Motorstart folgende Schritte umfasst:
- Anlegen der Kupplung,
- Aktivieren des Anlassers,
- gesteuerte Erhöhung des Kupplungsmoments, wenn der Anlasser beginnt mit dem Verbrennungsmotor zu drehen,
- Deaktivieren des Anlassers beim Erreichen einer ersten Motordrehzahlschwelle,
- Regelung des Kupplungsmoments ab Erreichen einer zweiten Motordrehzahlschwelle.

7. Verfahren nach dem vorhergehenden Anspruch, **dadurch gekennzeichnet, dass** es beendet wird, wenn die Motordrehzahl die Leerlaufdrehzahl oder die ausgangsseitige Drehzahl der Kupplung erreicht oder wenn die Kupplung vollständig geschlossen ist.

8. Verfahren nach einem der vorhergehenden Ansprüche, **dadurch gekennzeichnet, dass** das Kraftfahrzeug einen Ritzelstarter und einen Riemenstartergenerator zum Starten des Verbrennungsmotors aufweist, und dass der kombinierte Motorstart unter Verwendung des Ritzelstarters und des Riemenstartergenerator durchgeführt wird.

9. Kraftfahrzeug mit wenigstens einem Anlasser zum Starten des Verbrennungsmotors, wenigstens einer eingangsseitig mit einer Ausgangswelle dem Verbrennungsmotor und ausgangsseitig mit den Antriebsrädern des Kraftfahrzeugs gekoppelten automatisch gesteuerten Kupplung, und einer Steuerung, wobei die Steuerung dazu eingerichtet ist, das Verfahren nach einem der vorhergehenden Ansprüche auszuführen.

## Claims

1. Method for starting an internal combustion engine of a motor vehicle, having at least one starter for starting the internal combustion engine, having at least one automatically controlled clutch which is coupled at an input side to an output shaft of the internal combustion engine and at an output side to the drive wheels of the motor vehicle, wherein, during gliding of the motor vehicle, in which the motor vehicle rolls in a drive-free manner with deactivated internal combustion engine and open clutch, the internal combustion engine can be crank-started by closing the clutch, wherein the starter is a pinion-type starter and/or is a belt-type starter-generator which is permanently connected to the engine shaft, **characterized in that**, during gliding, a combined engine start of the internal combustion engine can be performed by means of a combination of the closing of the clutch and the use of the starter.

2. Method according to Claim 1, **characterized in that**, during gliding, driving parameters and/or load demands are determined and evaluated, and **in that** a selection is made as regards whether a combined engine start, a cranking start or engine starting by means of the starter is performed.

3. Method according to Claim 1 or 2, **characterized in that** the combined engine start is performed if a load demand or change in load demand reaches a particular switching threshold.

4. Method according to any of the preceding claims, **characterized in that** the combined engine start is performed if a low coefficient of friction between the drive wheels and the road is determined.

5. Method according to any of the preceding claims, **characterized in that** the combined engine start is triggered if a cranking start process has previously been terminated without the internal combustion engine starting up.

6. Method according to any of the preceding claims, **characterized in that** the combined engine start comprises the following steps:
- engaging the clutch,
- activating the starter,
- increasing the clutch torque in controlled fashion when the starter begins to rotate with the internal combustion engine,
- deactivating the starter when a first engine rotational speed threshold is reached,
- performing closed-loop control of the clutch torque from the point at which a second engine rotational speed threshold is reached.

7. Method according to the preceding claim, **characterized in that** said method is ended when the engine rotational speed reaches the idle rotational speed or the output-side rotational speed of the clutch, or when the clutch is completely closed.

8. Method according to any of the preceding claims, **characterized in that** the motor vehicle has a pinion-type starter and a belt-type starter-generator for starting the internal combustion engine, and **in that** the combined engine start is performed using the pinion-type starter and the belt-type starter-generator.

9. Motor vehicle having at least one starter for starting the internal combustion engine, having at least one automatically controlled clutch which is coupled at an input side to an output shaft of the internal combustion engine and at an output side to the drive wheels of the motor vehicle, and having a controller, wherein the controller is configured to carry out the method according to any of the preceding claims.

## Revendications

1. Procédé destiné au démarrage d'un moteur à combustion interne d'un véhicule automobile, comprenant au moins un démarreur pour faire démarrer le moteur à combustion interne, au moins un embrayage à commande automatique, couplé en entrée à un arbre de sortie du moteur à combustion interne et en sortie aux roues motrices du véhicule automobile, dans lequel, en fonctionnement sans friction du véhicule automobile, où le véhicule automobile se déplace sans entraînement, le moteur à combustion interne étant coupé et l'embrayage ouvert, le moteur à combustion interne peut être entraîné par la fermeture de l'embrayage, dans lequel le démarreur est un démarreur à pignon et/ou un générateur de démarrage à courroie constamment relié à l'arbre du moteur, **caractérisé en ce qu'**en fonctionnement sans friction, un démarrage moteur combiné du moteur à combustion interne peut être effectué en combinant la fermeture de l'embrayage et l'utilisation du démarreur.

2. Procédé selon la revendication 1, **caractérisé en ce qu'**en fonctionnement sans friction, des paramètres de conduite et/ou des demandes de charge sont déterminés et évalués, et **en ce qu'**il est sélectionné si un démarrage moteur combiné, un démarrage par entraînement ou un démarrage du moteur au moyen du démarreur est effectué.

3. Procédé selon la revendication 1 ou 2, **caractérisé en ce que** le démarrage moteur combiné est effectué lorsqu'une demande de charge ou un changement de demande de charge atteint un certain seuil de commutation.

4. Procédé selon l'une quelconque des revendications précédentes, **caractérisé en ce que** le démarrage moteur combiné est effectué lorsqu'un coefficient de friction faible est déterminé entre les roues motrices et la route.

5. Procédé selon l'une quelconque des revendications précédentes, **caractérisé en ce que** le démarrage moteur combiné est déclenché lorsqu'auparavant une opération de démarrage par entraînement, sans lancement du moteur à combustion interne, a été abandonnée.

6. Procédé selon l'une quelconque des revendications précédentes, **caractérisé en ce que** le démarrage moteur combiné comprend les étapes suivantes :
- application de l'embrayage,
- activation du démarreur,
- augmentation commandée du couple d'embrayage lorsque le démarreur commence à tourner en même temps que le moteur à combustion interne,
- désactivation du démarreur lorsqu'il atteint un premier seuil de vitesse de rotation du moteur,
- régulation du couple d'embrayage dès qu'un deuxième seuil de vitesse de rotation du moteur est atteint.

7. Procédé selon la revendication précédente, **caractérisé en ce qu'**il se termine lorsque la vitesse de rotation du moteur atteint la vitesse de rotation à vide ou la vitesse de rotation côté sortie de l'embrayage ou lorsque l'embrayage est complètement fermé.

8. Procédé selon l'une quelconque des revendications précédentes, **caractérisé en ce que** le véhicule automobile présente un démarreur à pignon et un générateur de démarrage à courroie pour faire démarrer le moteur à combustion interne, et **en ce que** le démarrage moteur combiné est effectué en utilisant le démarreur à pignon et le générateur de démarrage à courroie.

9. Véhicule automobile comprenant au moins un démarreur pour faire démarrer le moteur à combustion interne, au moins un embrayage à commande automatique, couplé en entrée à un arbre de sortie du moteur à combustion interne et en sortie aux roues motrices du véhicule automobile, et une unité de commande, l'unité de commande étant conçue pour effectuer le procédé selon l'une quelconque des revendications précédentes.
